# EUROPEAN PATENT APPLICATION

(11) **EP 4 228 227 A1**
(43) Date of publication of application: **16.08.2023**
(21) Application number: 21890668.3
(22) Date of filing: 20.07.2021
(51) Int. Cl.: H04M 1/02

(54) **ELECTRONIC APPARATUS**

(30) Priority: 16.11.2020 CN 202011281441; 08.06.2021 CN 202110639549
(71) Applicant: GUANGDONG OPPO MOBILE TELECOMMUNICATIONS CORP., LTD., Dongguan, Guangdong 523860 (CN)
(72) Inventor: GUO, Hua, Dongguan, Guangdong 523860 (CN)
(74) Representative: Thorniley, Peter
(86) International application number: PCT/CN2021/107258
(87) International publication number: WO 2022/100137

(57) **Abstract**

Provided is an electronic apparatus (100). The electronic apparatus (100) includes a housing assembly (10), a flexible screen module (20), and an electroacoustic device (40). The housing assembly (10) includes a first housing (12) and a second housing (14) movably disposed on the first housing (12). The flexible screen module (20) is disposed on the housing assembly. The electroacoustic device (40) is disposed in the housing assembly (10) and has a sound cavity (41a) defined therein. During a movement of the second housing (14) relative to the first housing (12), at least part of the flexible screen module (20) moves into or out of the housing assembly (10) and a volume of the sound cavity (41a) is variable.

## Description

### FIELD

The present disclosure relates to the technical field of terminals, and more particularly, to an electronic apparatus.

### BACKGROUND

A terminal apparatus such as a smart phone is generally configured with a speaker. The speaker may be configured to convert an electrical signal into a sound signal. A sound effect of the speaker of the terminal apparatus still needs to be improved.

### SUMMARY

Based on this, it is necessary to provide an electronic apparatus.

An embodiment of the present disclosure provides an electronic apparatus. The electronic apparatus includes a housing assembly, a flexible screen module, and an electroacoustic device. The housing assembly includes a first housing and a second housing movably disposed on the first housing. The flexible screen module is disposed on the housing assembly. The electroacoustic device is disposed in the housing assembly and has a sound cavity defined therein. During a movement of the second housing relative to the first housing, at least part of the flexible screen module moves into or out of the housing assembly and a volume of the sound cavity is variable.

An embodiment of the present disclosure provides an electronic apparatus. The electronic apparatus includes a housing assembly, a flexible screen module, and an electroacoustic device. The housing assembly includes a first housing, and a second housing movably disposed on the first housing. The flexible screen module is disposed on the housing assembly. The electroacoustic device has sound cavity defined therein. The electroacoustic device includes a body and a retractable member connected to the body. The body is configured to sound through electrifying and connected to the second housing. The retractable member has at least part of the sound cavity. During a movement of the second housing relative to the first housing, at least part of the flexible screen module moves into or out of the housing assembly, and the retractable member is stretched or retracted to enable a volume of the sound cavity to be variable.

### BRIEF DESCRIPTION OF THE DRAWINGS

In order to clearly illustrate technical solutions of embodiments of the present disclosure, drawings used in embodiments are briefly described below. The drawings in the following descriptions are only part embodiments of the present disclosure, and those skilled in the art can obtain other drawings based on these drawings without paying creative labor.
FIG. 1 is a schematic diagram of an electronic apparatus according to an embodiment, in which a first housing is at a second position.
FIG. 2 is a schematic diagram of the electronic apparatus illustrated in FIG. 1 in another perspective.
FIG. 3 is an exploded structural schematic view of the electronic apparatus illustrated in FIG. 1.
FIG. 4 is a schematic diagram of the electronic apparatus illustrated in FIG. 1, in which the first housing is at a first position.
FIG. 5 is a schematic diagram of the electronic apparatus illustrated in FIG. 4 in another perspective.
FIG. 6 is a front view of the electronic apparatus illustrated in FIG. 1.
FIG. 7 is an enlarged cross-sectional view, along A-A direction in FIG. 6, of an electronic apparatus according to an embodiment.
FIG. 8 is a front view of the electronic apparatus illustrated in FIG. 4.
FIG. 9 is an enlarged cross-sectional view, along B-B direction in FIG. 8, of an electronic apparatus according to an embodiment.
FIG. 10 is a cross-sectional view of an electroacoustic device according to an embodiment, in which a retractable member is in a spread state.
FIG. 11 is a cross-sectional view of the electroacoustic device illustrated in FIG. 10, in which the retractable member is in a folded state.
FIG. 12 is an enlarged cross-sectional view, along A-A direction in FIG. 6, of an electronic apparatus according to another embodiment.
FIG. 13 is an enlarged cross-sectional view, along B-B direction in FIG. 8, of an electronic apparatus according to another embodiment.
FIG. 14 is an enlarged cross-sectional view, along B-B direction in FIG. 8, of an electronic apparatus according to yet another embodiment.
FIG. 15 is a schematic diagram of a positional relation of an electroacoustic device with a first housing and a second housing according to an embodiment, in which a retractable member is in an spread state.
FIG. 16 is a schematic diagram of a positional relation of an electroacoustic device with a first housing and a second housing according to an embodiment, in which a retractable member is in a folded state.

### Reference numerals:

| | | | | | |
|---|---|---|---|---|---|
| 100. | electronic apparatus | 10. | housing assembly | 12. | first housing |
| 14. | second housing | 142. | rear cover | 16. | accommodation space |
| 20. | flexible screen module | 20a. | fixed end | 20b. | free end |
| 30. | guide member | 40. | electroacoustic device | 41. | body |
| 41a. | sound cavity | 41a1. | channel | 41b. | sound hole |
| 410. | first electroacoustic device | 420. | second electroacoustic device | 411. | casing |
| 413. | electroacoustic module | 43. | retractable member | 43a. | first end |
| 43b. | second end | 45. | expansion member | 45a. | receiving cavity |
| 50a. | camera module | 60. | driving mechanism | 70. | tension assembly |
| 71. | movable member | | | | |

### DETAILED DESCRIPTION

In order to facilitate understanding of the present disclosure, the present disclosure will be described in detail below with reference to the accompanying drawings. Preferred embodiments of the present disclosure are illustrated by means of the accompanying drawings. However, the present disclosure can be implemented in various forms, which are not limited to the embodiments described herein. These embodiments are merely provided to facilitate thorough and comprehensive understanding of the content of the present disclosure.

The "electronic apparatus" used herein includes, but is not limited to, an apparatus capable of receiving and/or transmitting a communication signal via any one or more of the following connection manners:
(1) a connection manner through a wired line, such as connection via a Public Switched Telephone Network (PSTN), a Digital Subscriber Line (DSL), a digital cable, or a direct cable; and
(2) a connection manner through a wireless interface, for example, a cellular network, Wireless Local Area Network (WLAN), a DVB-H network such as a digital TV network, a satellite network, or an AM-FM radio transmitter.

An electronic apparatus configured to communicate via a wireless interface can be referred to as a "mobile terminal". Examples of the mobile terminal include, but are not limited to, the following electronic apparatuses:
(1) a satellite phone or a cellular phone;
(2) a Personal Communications System (PCS) terminal capable of combining cellular radio telephone with data processing, facsimile, and a data communication capability;
(3) a radio telephone, a pager, an Internet/Intranet access, a Web browser, a notepad, a calendar, and a Personal Digital Assistant (PDA) equipped with a Global Positioning System (GPS) receiver;
(4) a conventional laptop and/or palmtop receiver; and
(5) a conventional laptop and/or palmtop radio telephone transceivers, etc.

An embodiment of the present disclosure provides an electronic apparatus. The electronic apparatus can include a housing assembly, a flexible screen module, and an electroacoustic device. The housing assembly can include a first housing and a second housing movably disposed on the first housing. The flexible screen module can be disposed on the housing assembly. The electroacoustic device can be disposed in the housing assembly and has a sound cavity defined therein. During a movement of the second housing relative to the first housing, at least part of the flexible screen module can move into or out of the housing assembly and a volume of the sound cavity is variable.

In an embodiment, the electroacoustic device can include a retractable member having at least part of the sound cavity; and during the movement of the second housing relative to the first housing, the retractable member can be stretched or retracted to enable the volume of the sound cavity to be variable.

In an embodiment, the retractable member can have a first end and a second end, a position of the first end and a position of the first housing being relatively fixed, and a position of the second end and a position of the second housing being relatively fixed; in response to that the flexible screen module can be spread out of the housing assembly, the retractable member can be stretched to enlarge the volume of the sound cavity; and in response to that the flexible screen module spread out of the housing assembly can be retracted into the housing assembly, the retractable member is shortened to reduce the volume of the sound cavity.

In an embodiment, the electroacoustic device can further include an expansion member connected to the second end, the expansion member having a receiving cavity in communication with the sound cavity, and the expansion member being connected to the first housing.

In an embodiment, the electroacoustic device can include a body connected to the first end and the second housing; and the sound cavity can be defined by the body and the expansion member together.

In an embodiment, the body can include: a casing connected to the first end and the second housing; and an electroacoustic module disposed in the casing and defining the sound cavity together with the casing and the retractable member.

In an embodiment, when the flexible screen module spread out of the housing assembly can be retracted into the housing assembly, the retractable member can be folded between the casing and the expansion member.

In an embodiment, two electroacoustic devices can be provided in a direction perpendicular to a direction of the movement of the first housing relative to the second housing and spaced apart from each other, one of the two electroacoustic devices being disposed at one end of the flexible screen module, and the other one of the two electroacoustic devices being disposed at the other opposite end of the flexible screen module.

In an embodiment, each of the two electroacoustic devices can include a body and an expansion member; the retractable member can be connected between the body and the expansion member of each of the two electroacoustic devices; the sound cavity can be defined by the body and the expansion member together; the expansion member of one of the two electroacoustic devices can be disposed on the first housing, and the body of the one electroacoustic device is disposed on the second housing; and the body of the other one of the two electroacoustic devices can be disposed on the first housing, and the expansion member of the other one electroacoustic device can be disposed on the second housing.

In an embodiment, any one of the two electroacoustic devices can be configured to sound from an end facing away from the other one of the two electroacoustic devices.

In an embodiment, the electronic apparatus can further include a guide member rotatably connected to the second housing and disposed at an end of the second housing facing away from the first housing; the flexible screen module can include a fixed end and a free end that are opposite to each other; the fixed end can be connected to the first housing; the free end bypasses the guide member and can accommodated in the housing assembly; and during the movement of the first housing relative to the second housing, the free end, along the guide member, can spread to the second housing or retracted in the housing assembly.

In an embodiment, the electronic apparatus can further include: an angle sensor connected to the second housing and the guide member, the angle sensor being configured to detect a rotation angle of the guide member; and a processor configured to control a loudspeaker parameter of the electroacoustic device based on the rotation angle, the angle sensor and the electroacoustic device being both in a communication connection with the processor.

An embodiment of the present disclosure provides an electronic apparatus. The electronic apparatus can include a housing assembly, a flexible screen module, and an electroacoustic device. The housing assembly can include a first housing, and a second housing movably disposed on the first housing. The flexible screen module can be disposed on the housing assembly. The electroacoustic device can have sound cavity defined therein. The electroacoustic device can include a body and a retractable member connected to the body. The body is configured to sound through electrifying and connected to the second housing. The retractable member can have at least part of the sound cavity. During a movement of the second housing relative to the first housing, at least part of the flexible screen module can move into or out of the housing assembly, and the retractable member can be stretched or retracted to enable a volume of the sound cavity to be variable.

In an embodiment, the retractable member can have a first end and a second end, a position of the first end and a position of the first housing being relatively fixed, and a position of the second end and a position of the second housing being relatively fixed; in response to that the flexible screen module can be spread out of the housing assembly, the retractable member can be stretched to enlarge the volume of the sound cavity; and in response to that the flexible screen module spread out of the housing assembly can be retracted into the housing assembly, the retractable member can be shortened to reduce the volume of the sound cavity.

In an embodiment, the electroacoustic device can include an expansion member connected to an end of the retractable member facing away from the body, the expansion member having a receiving cavity in communication with the sound cavity, and the expansion member being connected to the first housing.

In an embodiment, when the flexible screen module spread out of the housing assembly is retracted into the housing assembly, the retractable member can be folded between the housing and the expansion member.

In an embodiment, two electroacoustic devices can be provided in a direction perpendicular to a direction of the movement of the first housing relative to the second housing and spaced apart from each other, one of the two electroacoustic devices being disposed at one end of the flexible screen module, and the other one of the two electroacoustic devices being disposed at the other opposite end of the flexible screen module.

In an embodiment, each of the two electroacoustic devices can further include an expansion member; the retractable member can be connected between the body and the expansion member of each of the two electroacoustic devices; the sound cavity can be defined by the body and the expansion member together; the expansion member of one of the two electroacoustic devices can be disposed on the first housing, and the body of the one electroacoustic device can be disposed on the second housing; the body of the other one of the two electroacoustic devices can be disposed on the first housing, and the expansion member of the other one electroacoustic device is disposed on the second housing.

In an embodiment, any one of the two electroacoustic devices can be configured to sound from an end facing away from the other one of the two electroacoustic devices.

In an embodiment, the electronic apparatus can further include: a sensor disposed at the housing assembly and configured to detect a spread-out length of the flexible screen module spread out of the housing assembly; and a processor configured to control a loudspeaker parameter of the electroacoustic device based on the spread-out length, the angle sensor and the electroacoustic device being both in a communication connection with the processor.

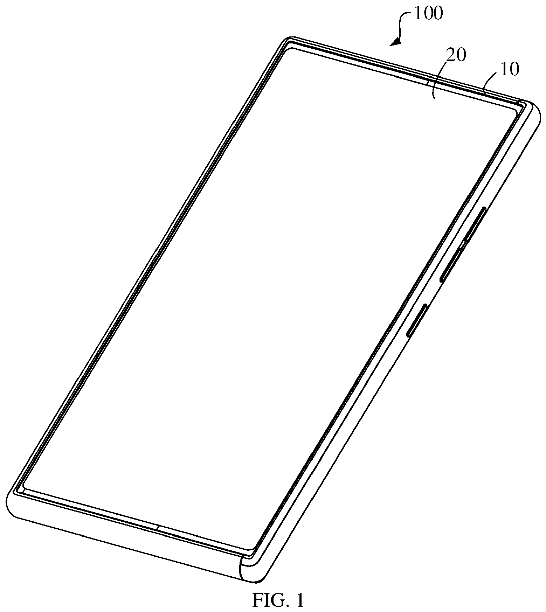

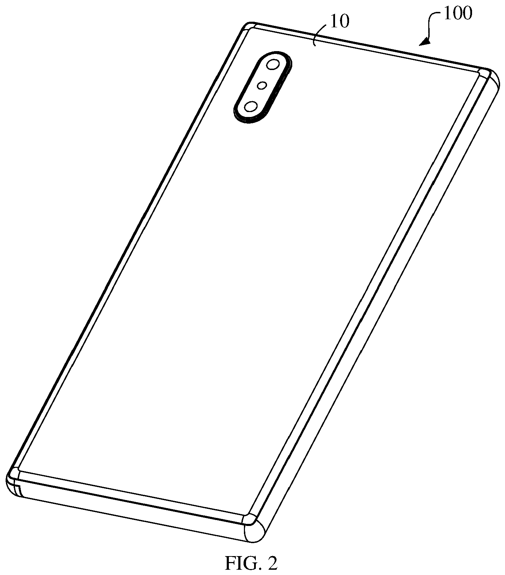

As illustrated in FIG. 1, FIG. 2 and FIG. 3, the electronic apparatus 100 according to an embodiment includes a housing assembly 10, a flexible screen module 20, and a guide member 30. The housing assembly 10 is hollow structure. The flexible screen module 20, the guide member 30, and others may be disposed on housing assembly 10. The electronic apparatus 100 may further include a circuit board (not shown), a battery (not shown), and an electroacoustic device 40. The circuit board, the battery, and the electroacoustic device 40 may be all disposed on the housing assembly 10. The circuit board may be integrated with a processor, a power management module, a memory unit, and a baseband chip of the electronic apparatus 100. The electroacoustic device 40 may include at least one of a speaker or a receiver. The speaker is configured to convert an electrical signal into a sound signal, for example, the speaker may be configured to play audio information. The receiver is configured to convert the sound signal into the electrical signal, for example, the receiver may be used for a user's call process. In the present disclosure, the speaker is taken as an example for description. The flexible screen module 20 and the electroacoustic device 40 are both in communication connection with the circuit board. The battery can supply power to the flexible screen module 20, the electroacoustic device 40, and electronic elements on the circuit board. The electronic apparatus 100 may further include a camera module 50. The camera module 50 is in a communication connection with the circuit board, and the battery can supply power to the camera module 50. It should be understood that the electronic apparatus 100 according to the embodiments of the present disclosure includes, but is not limited to, a terminal device such as a mobile phone or a tablet computer, or other portable electronic apparatus 100. In the embodiments of the present disclosure, the mobile phone is taken as an example for description.

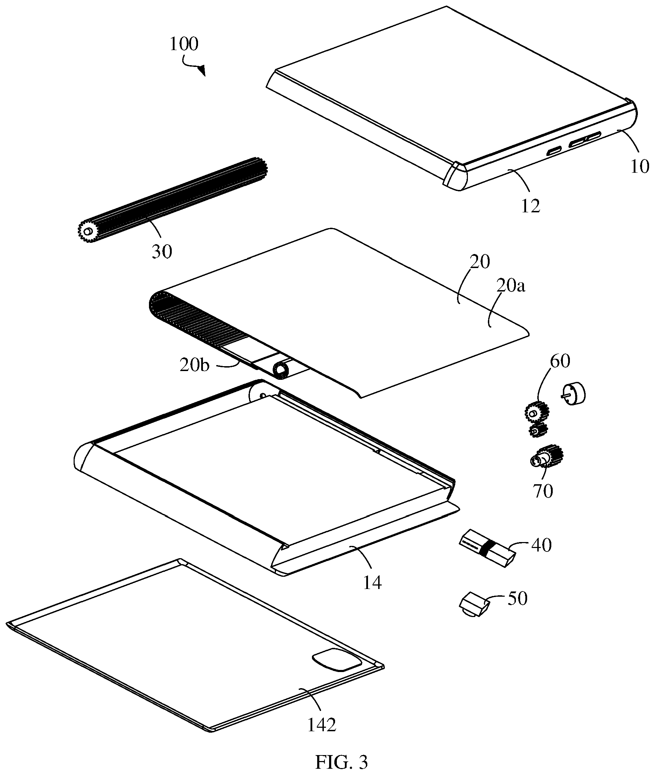

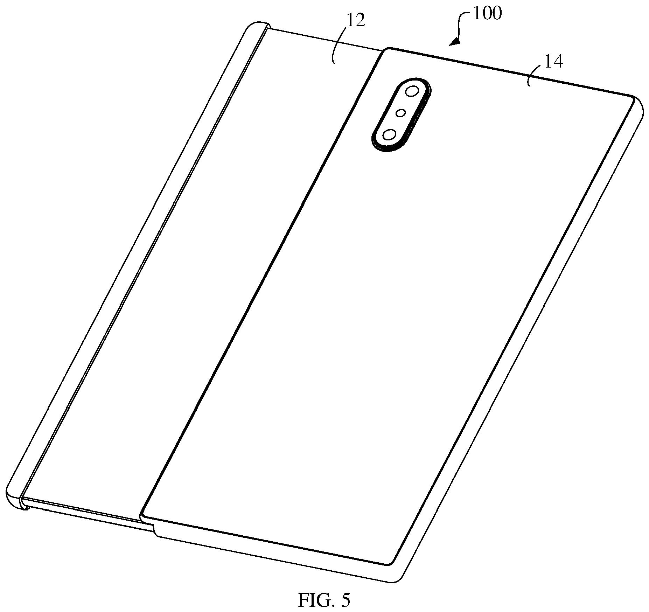

In an embodiment as illustrated in FIG. 3, FIG. 4 and FIG. 5, the housing assembly 10 includes a first housing 12 and a second housing 14. The second housing 14 and the first housing 12 can move relative to each other. Specifically, in the present embodiment, the second housing 14 is slidably connected to the first housing 12. That is, the first housing 12 can slidably move relative to the second housing 14. For example, one of the first housing 12 and the second housing 14 may be provided with a slide rail, while the other one thereof may slide along the slide rail.

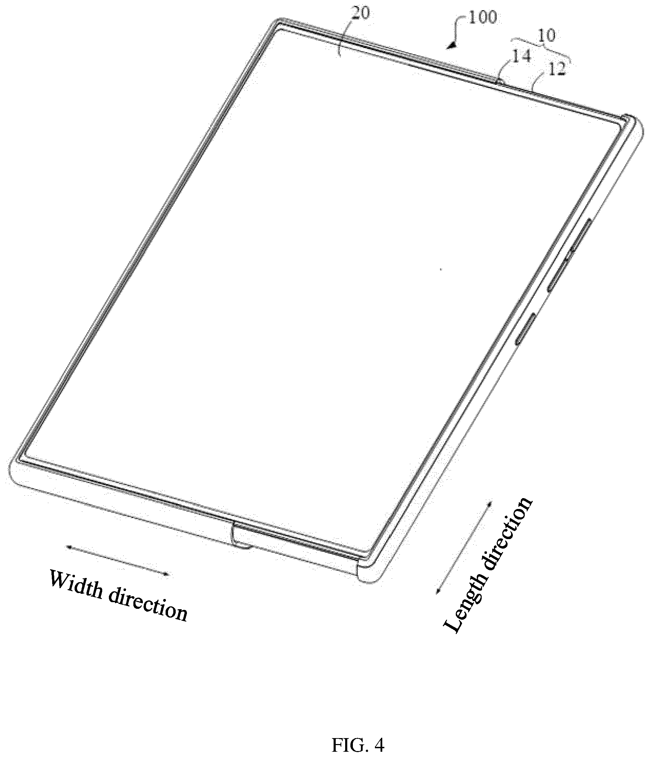

The first housing 12 can slide relative to the second housing 14 to move to a first position and a second position. As illustrated in FIG. 4, when the first housing 12 is at the first position, the electronic apparatus 100 can have a relatively large display area to improve use experience of the electronic apparatus 100. When the first housing 12 is at the second position (as illustrated in FIG. 1), the electronic apparatus 100 has a relatively small overall dimension and thus is more portable.

In the present embodiment, an overall width of the electronic apparatus 100 when the first housing 12 is at the first position is greater than that when the first housing 12 is at the second position, thereby enabling a width size of the exposed flexible screen module 20 to be variable. That is, the size of the electronic apparatus 100 in a width direction is variable. In such an embodiment, an external interface of the electronic apparatus 100, for example, a data line jack or a charging line jack or an earphone jack, may be disposed at an end portion in the width direction. In other embodiments, an overall length of the electronic apparatus 100 when the first housing 12 is at the first position is greater than that when the first housing 12 is at the second position, thereby enabling a length size of the exposed flexible screen module 20 to be variable. That is, the size of the electronic apparatus 100 in a length direction is variable. In such an embodiment, the external interface of the electronic apparatus 100, for example, the data line jack or the charging line jack or the earphone jack, may be disposed at the end portion in the length direction.

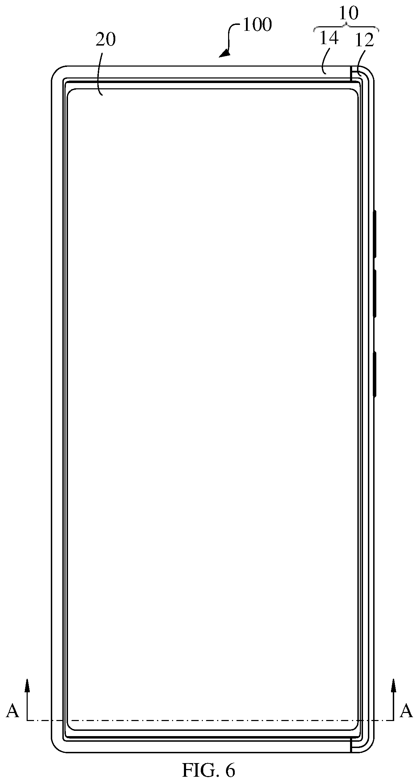

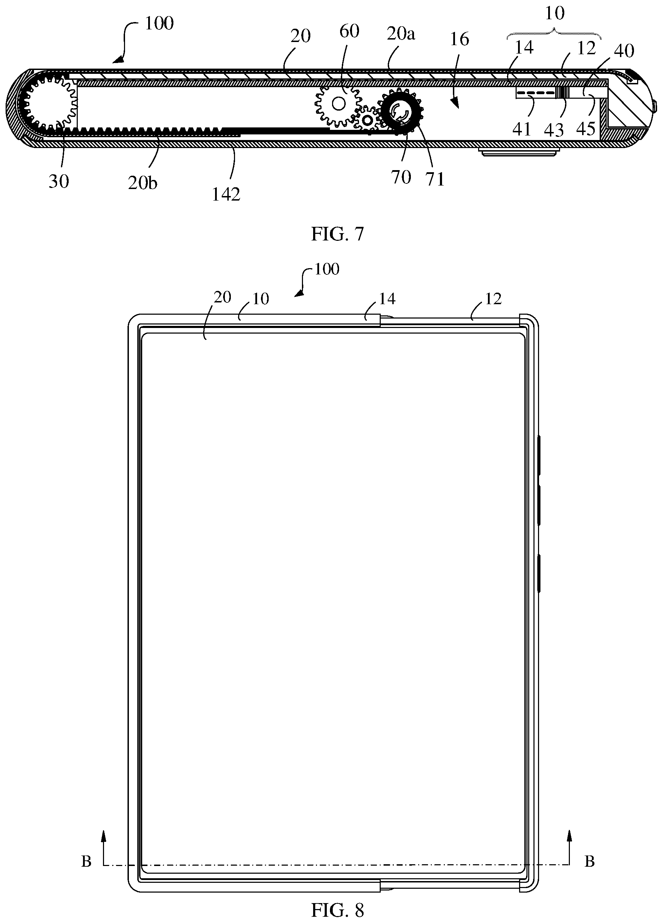

In some embodiments, as illustrated in FIG. 6 and FIG. 7, the first housing 12 and the second housing 14 may together define an accommodation space 16. It should be understood that the accommodation space 16 may change with a relative movement between the first housing 12 and the second housing 14. The accommodation space 16 may be configured to accommodate a guide member 30, the circuit board, the battery, the electroacoustic device 40, etc. The flexible screen module 20 may include a fixed end 20a and a free end 20b that are opposite to each other. The fixed end 20a is disposed on the first housing 12. At the second position, the flexible screen module 20bypasses the guide member 30, and the free end 20b of the flexible screen module 20 is accommodated in the housing assembly 10, to enable a part of the flexible screen modules 20 to be hidden in the housing assembly 10. The part of the flexible screen modules 20 hidden in the housing assembly 10 may not be used for display.

It should be understood that the fixed end 20a and the free end 20b may be distinguished from other in the following manner. When the first housing 12 is at the second position relative to the second housing 14, a part of the flexible screen module 20 exposed to the outside of the housing assembly 10 can be regarded as the fixed end 20a of the flexible screen module 20, and the part of the flexible screen module 20accommodated in the housing assembly 10 can be regarded as the free end 20b.

Further, the second housing 14 may include a rear cover 142. At the second position, the free end 20b of the flexible screen module 20 is covered by the rear cover 142. The rear cover 142 may have a light transmission region. At the second position, the part of the flexible screen module 20accommodated in the housing assembly 10 may also be used for display, such that the user can view information displayed by the flexible screen module 20 from the light transmission area, thereby extending the application scenarios of the electronic apparatus 100. For example, in the present embodiment, without providing a front camera in the electronic apparatus 100, a rear camera module 50 can be employed to implement functions such as taking a selfie and having a video call. The light transmission region may be made of transparent glass, or may be formed as an opening on the rear cover 142. After the first housing 12 slides to the first position relative to the second housing 14, at least the part of the flexible screen module 20accommodated in the housing assembly 10 is exposed. The exposed flexible screen module 20 may be used for display to enlarge a display area of the electronic apparatus 100, thereby improving the user experience.

In the present embodiment, the guide member 30 is disposed at an end of the second housing 14 facing away from the first housing 12. In a process of switching the first housing 12 from the second position to the first position relative to the second housing 14, the guide member 30 can guide the flexible screen module 20 to deform and spread in the second housing 14. The guide member 30 can limit a bending radius of the flexible screen module 20 within a suitable range, thereby avoiding damage to the flexible screen module 20 caused by an excessively small bending radius. The guide member 30 can further avoid an excessively great thickness of the electronic apparatus 100, which is caused by an excessively large bending radius of the flexible screen module 20. As illustrated in FIG. 7, in some embodiments, the guide member 30 may be a rotating shaft structure having teeth, and the flexible screen module 20 moves jointly with the guide member 30 in an engagement manner. When the first housing 12 slides relative to the second housing 14, a part of the flexible screen module 20 engaged with the guide member 30 is driven by the guide member 30 to move to be spread or retracted into the housing assembly 10.

It should be understood that, in other embodiments, the guide member 30 may also be a cylinder shaft without teeth. In the process that the first housing 12 is switched from the second position to the first position, the part of the flexible screen module 20attached to the guide member 30 is spread by the guide member 30, allowing more flexible screen module 20 to be exposed to the outside of the housing assembly 10 and allowing the flexible screen module 20 to be in a flat state.

In the present embodiment, the guide member 30 is rotatably disposed on the second housing 14. In the process of gradually spreading the flexible screen module 20, the guide member 30 may rotate along with the movement of the flexible screen module 20, to reduce resistance force faced by the flexible screen module 20 in the spreading process and to reduce the abrasion of the guide member 30.

In other embodiments, the guide member 30 may also be fixed on the second housing 14 and has a smooth surface. In the spreading process of the flexible screen module 20, the guide member 30, through smooth surface thereof, is in a sliding contact with the flexible screen module 20. That is, in the present embodiment, the guide member 30 may be integrally formed with the second housing 14 or welded to the second housing 14, and the guide member 30 can be regarded as a part of the second housing 14. The free end 20b of the flexible screen module 20bypasses an end of the second housing 14 facing away from the first housing 12 and extends into the housing assembly 10.

In the process that the first housing 12 is switched from the first position to the second position, the flexible screen module 20 may be driven by the guide member 30 to be retracted, i.e., a part of the flexible screen module 20 spread on the second housing 14 is retracted into the housing assembly 10. Further, in some embodiments, the electronic apparatus 100 may include a driving mechanism 60. The driving mechanism 60 may be disposed in the housing assembly 10. The driving mechanism 60 can move jointly with the second housing 14 or the first housing 12 to drive the first housing 12 to move relative to the second housing 14, thereby driving the flexible screen module 20 to be spread or retracted. It should be understood that the driving mechanism 60 may be omitted, and the user can directly and manually move the first housing 12 and the second housing 14.

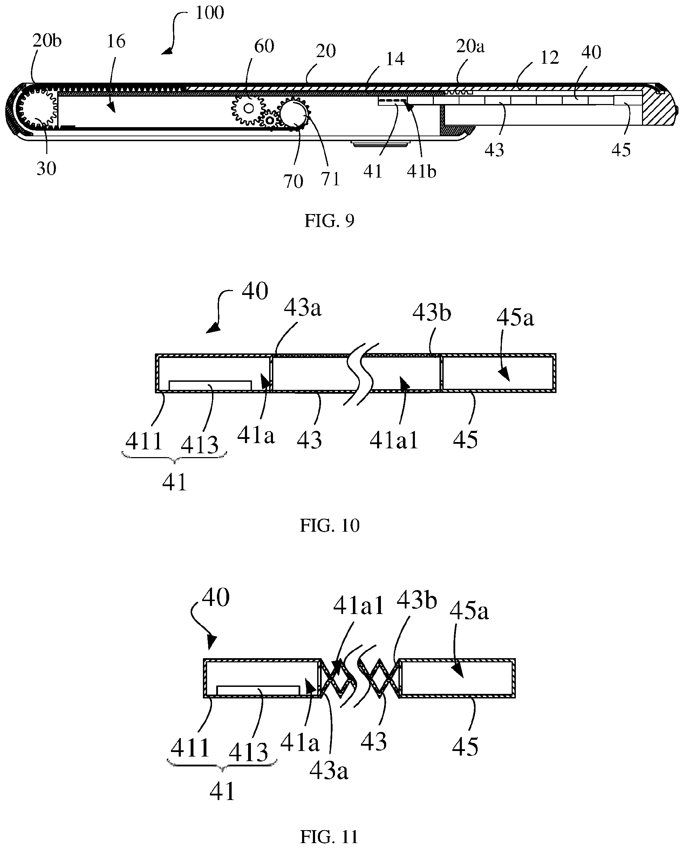

As illustrated in FIG. 8 and FIG. 9, the electronic apparatus 100 may further include a tension assembly 70. The free end 20b of the flexible screen module 20 moves jointly with the tension assembly 70. In the process that the second housing 14 is switched from the first position to the second position, the flexible screen module 20 is driven by the tension assembly 70 to reset, allowing a part of the flexible screen module 20 to be retracted into the housing assembly 10. After the flexible screen module 20 is retracted into the housing assembly 10, the electronic apparatus 100 can have a relatively small overall dimension and thus is more portable.

In some embodiments, the tension assembly 70 is disposed in the housing assembly 10 and is connected to the free end 20b of the flexible screen module 20. The tension assembly 70 includes an elastic member and a movable member 71. The movable member 71 is rotatably connected to the second housing 14. The elastic member may be a torsion spring. A free end 20b of the torsion spring is connected to the second housing 14, and the other free end 20b of the torsion spring is connected to the movable member 71. The torsion spring may be sleeved on the movable member 71.In the process that the first housing 12 is switched between the first position to the second position relative to the second housing 14, the torsion spring produces torsional deformation and applies tension force on the flexible screen module 20 through the movable member 71.

In the process that the flexible screen module 20 extends out of the housing assembly 10, i.e., in the process that the first housing 12 is switched from the second position to the first position, the free end 20b of the flexible screen module 20 drives the movable member 71 to rotate relative to the second housing 14, to release the flexible screen module 20 wound around the movable member 71. The elastic member accumulates elastic potential energy, and the tension force applied on the flexible screen module 20by the movable member 71 serve as a resistance force, enabling the flexible screen module 20 to be flatly spread on the second housing 14. In the process that the flexible screen module 20 is retracted into the housing assembly 10, i.e., in the process that the first housing is switched from the first position to the second position, the elastic member releases the elastic potential energy and drives the movable member 71 to reset, and the tension force applied on the flexible screen module 20by the movable member 71 serves as a driving force, enabling the flexible screen module 20 to be smoothly retracted into the housing assembly 10 and the free end 20b to be wound around the movable member 71.

In other embodiments, the tension assembly 70 may have other structural forms. For example, the movable member 71 and the elastic member may be omitted, and the tension assembly 70 includes an elastic rope connected to the second housing 14 or the first housing 12. The elastic rope can apply a tension force on the flexible screen module 20 during the movement of the second housing 14 relative to the first housing 12. For example, in an embodiment that the electronic apparatus 100 includes the driving mechanism 60, the driving mechanism 60 may be connected to the free end 20b of the flexible screen module 20. In the process that the flexible screen module 20 extends out of the housing assembly 10, the driving mechanism 60 can gradually release the flexible screen module 20 and apply a tension force on the flexible screen module 20, enabling the flexible screen module 20 to be smoothly spread on the second housing 14. In the process that the flexible screen module 20 is retracted into the housing assembly 10, the driving mechanism 60 can drive the free end 20b of the flexible screen module 20 to gradually wind around a shaft, enabling the flexible screen module 20 to be stably retracted into the housing assembly 10. In the present embodiment, the driving mechanism 60 may be a motor or a combination of the motor and a gear set.

It should be understood that, in the present embodiment, the first position and the second position may be regarded as two limiting positions of the relative movement of the first housing 12 and the second housing 14. At the first position, the flexible screen module 20 can have the maximum display area, and generally, the first housing 12 cannot further move relative to and away from the second housing 14. At the second position, the flexible screen module 20 can have the minimum display area and generally, the second housing 14 cannot further move relative to and close to the second housing 14. The first position and the second position may be defined by providing a position limit structure on the first housing 12 or the second housing 14 or the guide member 30. For example, an elastic piece may be disposed on the first housing 12, and two grooves may be defined on the second housing 14. At the first position, the elastic piece is engaged with one of the two grooves, thereby positioning the first housing 12 at the first position with respect to the second housing 14. At the second position, the elastic piece is engaged with the other groove, thereby positioning the first housing 12 at the second position with respect to the second housing 14. It should be understood that a plurality of intermediate positions may also be defined between the first position and the second position to position the first housing 12 relative to the second housing 14 at the plurality of positions, such that the flexible screen module 20 can have different display areas at different intermediate positions, thereby expanding the application scenarios of the electronic apparatus 100. The plurality of intermediate positions may also be defined by means of the position limit structure. For example, the first housing 12 can be positioned relative to the second housing 14 at the plurality of intermediate positions through a cooperation between the elastic piece and the groove.

As illustrated in FIG. 10 and FIG. 11, the electroacoustic device 40 of the electronic apparatus 100 may include a body 41 and a retractable member 43. The body 41 may be substantially in a shape of rectangular block, and a sound cavity 41a is defined by the body 41 and the retractable member 43 together. One end of the retractable member 43 is connected to the body 41. A position of one end of the retractable member 43 and a position of one of the first housing 12, the second housing 14, and the free end 20b are relatively fixed. A position of the other end of the retractable member 43 and a position of one of the remaining two of the first housing 12, the second housing 14, and the free end 20b are relatively fixed. That is, the retractable member 43 may have a first end 43a and a second end 43b. The body 41 may be connected to the first end 43a. A position of the first end 43a and a position of one of the first housing 12, the second housing 14, and the free end 20b are relatively fixed. A position of one of the second end 43b and a position of one of the remaining two of the first housing 12, the second housing 14, and the free end 20b are relatively fixed. After the flexible screen module 20 extends out of the housing assembly 10, for example, at the first position, the retractable member 43 is spread to enlarge a volume of the sound cavity 41a. After the flexible screen module 20 extending out of the housing assembly 10 is retracted into the housing assembly 10, for example, at the second position, the volume of the sound cavity 41a is reduced.

In some embodiments, the body 41 or the first end 43a may be fixedly connected to the fixed end 20a of the flexible screen module 20 or the first housing 12, such that the position of the body 41 and the position of the first end 43a are relatively fixed with respect to the position of the fixed end 20a; and the second end 43b of the retractable member 43 may be connected to the second housing 14 or the free end 20b of the flexible screen module 20, to produce a retractable deformation during the movement of the first housing 12 relative to the second housing 14. As illustrated in FIG. 9, in other embodiments, the second end 43b of the retractable member 43 may be connected to the fixed end 20a of the flexible screen module 20 or the first housing 12, such that a position of a connection portion of the retractable member 43 and the position of the fixed end 20a are relatively fixed; and the body 41 or the first end 43a may be fixedly connected to the second housing 14 or the free end 20b of the flexible screen module 20, to produce the retractable deformation during the movement of the first housing 12 relative to the second housing 14. In other embodiments, the first end 43a of the retractable member 43 (or the body 41) may be connected to one of the second housing 14 and the free end 20b, and the second end 43b of the retractable member 43 may be connected to the other one of the second housing 14 and the free end 20b, such that the retractable member 43 can be stretched or retracted during the movement of the first housing 12 relative to the second housing 14. In this way, the volume of the sound cavity 41a and thus space for reflecting sound can be changed, and details thereof will not be described herein.

As illustrated in FIG. 10, the body 41 may include a casing 411 and an electroacoustic module 413. The casing 411 is connected to the first end 43a of the retractable member 43. The electroacoustic module 413 is disposed in the casing 411 and defines the sound cavity 41a together with the casing 411 and the retractable member 43. The casing 411 has a sound hole 41b (as illustrated in FIG. 9). A position of one of the first housing 12, the second housing 14, and the free end 20b and a position of the casing 411 may be relatively fixed, i.e., a position of one of the first housing 12, the second housing 14, and the free end 20b and a position of the electroacoustic module 413 are relatively fixed. For example, in some embodiments, the casing 411 is fixedly connected to the fixed end 20a or the first housing 12, such that the position of the casing 411 and the position of the fixed end 20a are relatively fixed; and the second end 43b of the retractable member 43 is fixedly connected to the second housing 14 or the free end 20b of the flexible screen module 20, such that the retractable member 43 can be stretched or retracted during the movement of the first housing 12 relative to the second housing 14. For example, in other embodiments, the casing 411 is fixedly connected to the second housing 14 or the free end 20b of the flexible screen module 20, such that the casing 411 can relatively fixed to the second housing 14 or the free end 20b. The second end 43b of the retractable member 43 is fixedly connected to the first housing 12 or the fixed end 20a, such that the retractable member 43 can be stretched or retracted during the movement of the first housing 12 relative to the second housing 14. It should be understood that the casing 411 of the body 41 is not essential. For example, the sound unit of the electroacoustic module 413 may be directly connected to the retractable member 43.

Further, in the present embodiment, in the process that at least part of the flexible screen module 20 is spread on the second housing 14 with the movement of the first housing 12 relative to the second housing 14, i.e., in the process that the first housing 12 is switched from the second position to the first position relative to the second housing 14, the retractable member 43 is spread to define a channel 41a1. The channel 41a1 of the retractable member 43 serves as a variable part of the sound cavity 41a, to enlarge space for sound reflection and resonance, as illustrated in FIG. 10. The electroacoustic module 413 may be electrically connected to the circuit board, and the electroacoustic module 413 may be configured to convert the electrical signal into the sound signal. When other conditions are unchanged, the volume of the sound cavity 41a may directly determine a low-frequency resonance frequency of the electroacoustic device 40, the low-frequency resonance frequency decreases, i.e., low frequency performance is better with an increased in the volume of the sound cavity 41a for resonance. Therefore, after the retractable member 43 is stretched to form the channel 41al, the channel 41a1 can enlarge the space for reflecting sound of the electroacoustic device 40 to improve the low-frequency effect of the electroacoustic device 40, i.e., to improve the sound quality of the electronic apparatus 100. That is, the sound effect of the electroacoustic device 40 and the sound effect of the electronic apparatus 100 can be both enhanced. After the part of the flexible screen module 20 spread on the second housing 14 is retracted into the housing assembly 10 with the movement of the first housing 12 relative to the second housing 14, i.e., in the process that the first housing 12 is switched from the first position to the second position relative to the second housing 14, due to the reduced volume of the channel 41a1 of the retractable member 43, the space for reflecting the sound of the electroacoustic device 40 decreases, and the low-frequency performance of the electroacoustic device 40 correspondingly deteriorates, as illustrated in FIG. 11.

In the related art, the volume of the sound cavity 41a of the electroacoustic device 40 of the terminal apparatus such as a smart phone is generally unchanged. For example, the volume of the sound cavity 41a of the speaker provided in the terminal apparatus ranges from 0.6 m³ to 1 m³. When the speaker is used to play audio, due to the limited volume of the sound cavity 41a, a loudspeaker sound quality cannot reach a relatively high level. In the present embodiment, the retractable deformation of the retractable member 43 can change the space for reflecting sound, thus the loudspeaker sound quality of the electroacoustic device 40 can be adaptively adjusted based on the display area of the flexible screen module 20, thereby expanding the application scenarios of the electroacoustic device 40. For example, when the electronic apparatus 100 has a relatively large display area (e.g., playing a game or watching a movie), since the volume of the sound cavity 41a is increased by the channel 41a1, the electroacoustic device 40 has relatively good low-frequency performance, thereby improving the user experience and enabling the sound quality of the electroacoustic device 40 to match with a picture displayed by the flexible screen module 20. That is, the sound and the picture match with each other, such that the volume of the electroacoustic device 40 can be enlarged or a better sound field balance thereof can be achieved. When the electronic apparatus 100 has a relatively small display area (e.g., viewing information, browsing a webpage), the volume of the channel 41a1 of the retractable member 43 is reduced, and the volume of the channel 41a1 may even be reduced to be close to 0 to reduce the low-frequency performance of the electroacoustic device 40. In this way, the sound and the picture can match with each other again, the sound volume can be reduced, and balance of the sound field can be achieved.

In the electronic apparatus 100 described above, the first housing 12 can move relative to the second housing 14 to drive the flexible screen module 20 to be spread on the second housing 14 or be retracted into the housing assembly 10. When the flexible screen module 20 is spread on the second housing 14, the electronic apparatus 100 can have a relatively large display area to improve the use experience. The retractable member 43 is stretched to form the channel 41a1, and the channel 41a1 can enlarge the reflection space of the sound to change an audio characteristic of the electroacoustic device 40, thereby improving the sound effect of the electroacoustic device 40. After the flexible screen module 20 spread on the second housing 14 is retracted into the housing assembly 10, the electronic apparatus 100 can have a relatively small overall dimension and thus is more portable. In addition, due to the correspondingly reduced volume of the channel 41a1, the audio characteristic of the electroacoustic device 40 can also be correspondingly changed. The above-mentioned electroacoustic device 40 of the electronic apparatus 100 can adjust the audio characteristic based on the size of the display area of the flexible screen module 20, i.e., adjusting the audio characteristic of the electroacoustic device 40 based on different application scenarios, thereby expanding the application scenarios of the electroacoustic device 40.

In the embodiments described above, the retractable member 43 is in a sealed connection with the casing 411, and an opposite end of the retractable member 43 may also achieve a sealed connection. As an example, when the casing 411 is fixedly connected to the first housing 12, the second end 43b of the retractable member 43 is in a sealed connection with the second housing 14 or the free end 20b, and the retractable member 43 may define closed space together with the casing 411 and the electroacoustic module 413 to obtain a better resonance effect and improve the low-frequency performance of the electroacoustic device 40.

With continued reference to FIG. 10 and FIG. 11, in other embodiments, the electroacoustic device 40 may further include an expansion member 45. The expansion member 45 may be substantially in a shape of a rectangular box and has a receiving cavity 45a defined thereon. The second end 43b of the retractable member 43 is in a sealed connection with the sound cavity 41a. At the first position, the receiving cavity 45a is in communication with the channel 41a1 of the retractable member 43, enabling the receiving cavity 45a to be in communication with the sound cavity 41a. A position of one of the expansion member 45 and the casing 411 and a position of one of the first housing 12, the second housing 14, and the free end 20b are relatively fixed, and a position of the other one of the expansion member 45 and the casing 411 and a position of one of the remaining two of first housing 12, the second housing 14, and the free end 20b are relatively fixed.

Specifically, in the present embodiment, the casing 411 may be fixedly connected to the fixed end 20a or the first housing 12, such that the position the body 41 and the position of the fixed end 20a are relatively fixed. The expansion member 45 may be fixedly connected to the second housing 14 or the free end 20b, such that the retractable member 43 can be deform to spread and retract during the movement of the first housing 12 relative to the second housing 14, and such that the volume of the channel 41a1 defined by the retractable member 43 changes, thereby changing the low-frequency characteristics of the electroacoustic device 40. The casing 411 may be fixedly connected to the second housing 14 or the free end 20b, and the expansion member 45 is fixedly connected to the first housing 12 or the fixed end 20a of the flexible screen module 20, such that the retractable member 43 can be stretched or retracted during the movement of the first housing 12 relative to the second housing 14, and such that the volume of the channel 41a1 defined by the retractable member 43 changes, thereby changing the low-frequency characteristic of the electroacoustic device 40.

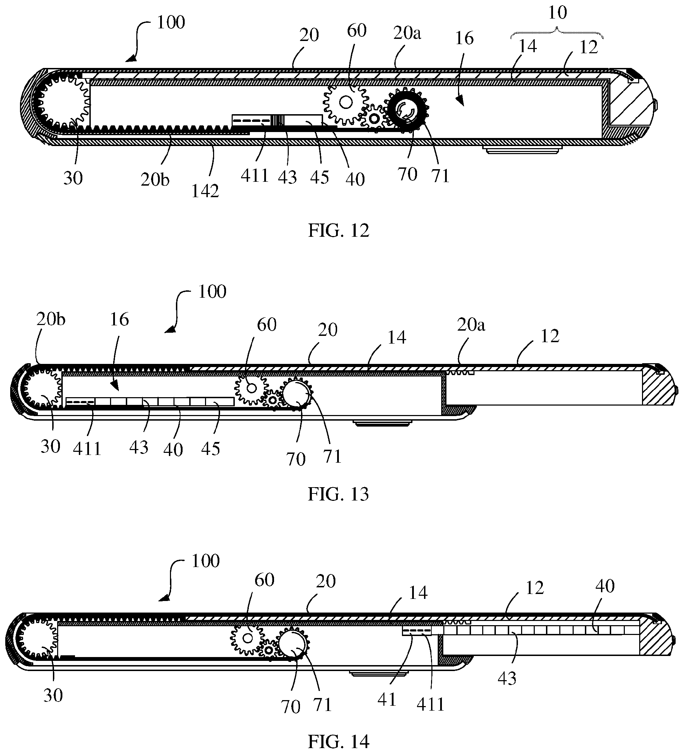

As illustrated in FIG. 12 and FIG. 13, the casing 411 is fixedly connected to the free end 20b, and the expansion member 45 is fixedly connected to the second housing 14. In this way, the retractable member 43 can be stretched or retracted during the movement of the first housing 12 relative to the second housing 14, and the volume of the channel 41a1 defined by the retractable member 43 changes, thereby changing the low-frequency characteristic of the electroacoustic device 40. In the present embodiment, the casing 411, the expansion member 45, and the retractable member 43 of the electroacoustic device 40 are all disposed in the second housing 14, facilitating the assembly thereof.

For example, in the present disclosure, one of the casing 411 and the expansion member 45 is connected to the first housing 12, and the other one of the casing 411 and the expansion member 45 is connected to the second housing 14. Such a structure and configuration can facilitate the assembly of the casing 411 and the expansion member 45 in the housing assembly 10. For example, the casing 411 or the expansion member 45 may be fixedly connected to the first housing 12 or the second housing 14 through threads or through bonding or welding. In comparison with that the casing 411 or the expansion member 45 is fixedly connected to the free end 20b and freely movable with the free end 20b, the above-mentioned embodiment can prevent the expansion member 43 from being bent to reduce a fatigue service life of the extension member 43, thereby guaranteeing a service life of the electroacoustic device 40 and reducing the difficulty of the assembly.

In the embodiments of the present disclosure, the retractable member 43 may be a silicone member, a rubber member, or a plastic member. The retractable member 43 has a crease formed thereon and used to guide the deformation of the retractable member 43. For example, in the present embodiment, after the flexible screen module 20 spread on the second housing 14 is retracted into the housing assembly 10, i.e., when the first housing 12 is at the second position, the retractable member 43 is folded between the casing 411 and the expansion member 45, as illustrated in FIG. 11. The retractable member 43 can be guided to fold by means of the crease, such that the retractable transformation of the retractable member 43 is controllable and interference with other devices in the electronic apparatus 100 can be prevented. When the retractable member 43 is folded between the expansion member 45 and the casing 411, the retractable member 43 may have an extremely small thickness. That is, the volume of the channel 41a1 may approximately be 0 to provide a good communication between the receiving cavity 45a and the sound cavity 41a, thereby obtaining a relatively stable audio characteristic. It should be understood that the crease is not essential. It is also not required that the volume of the channel 41a1 can approximately be 0 at the second position. That is, at the first position, at the second position, and at a position between the first position and the second position, the channel 41al can always exist, the sound cavity 41a is always in communication with the cavity 45a, and the cavity 45a can always be used for sound reflection and sound resonance of the electroacoustic module 413.

It should be understood that the expansion member 45 is not essential. As illustrated in FIG. 14, in some embodiments, one end of the retractable member 43 is in a sealed connection with the first housing 12, and the other end of the retractable member 43 is in a sealed connection with the casing 411 of the body 41. The casing 411 of the body 41 is connected to the second housing 14. During the movement of the first housing 12 relative to the second housing 14, the retractable member 43 is stretched or retracted, changing the volume of the channel 41a1 in the retractable member 43, and further changing the volume of the sound cavity. That is, the audio characteristic of the electroacoustic device 40 may be changed.

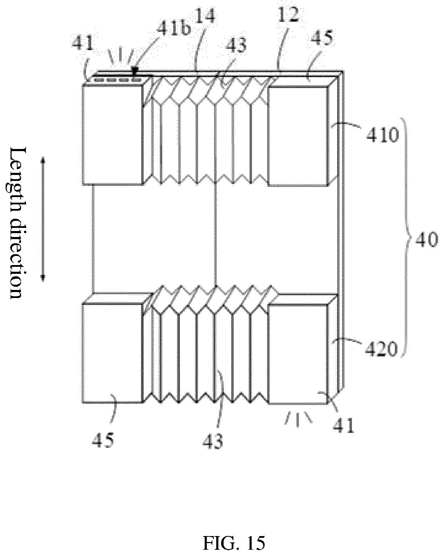

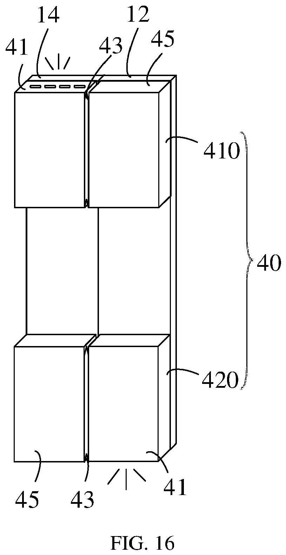

Further, as illustrated in FIG. 15 and FIG. 16, two electroacoustic devices 40 may be disposed in a direction perpendicular to the movement direction of the first housing 12 relative to the second housing 14 and spaced apart from each other. One of the two electroacoustic devices 40 is disposed at an end of the flexible screen module 20, and the other one is disposed at the other opposite end of the flexible screen module 20. That is, in the present embodiment, one tow electroacoustic device 40 is disposed at an end of the electronic apparatus 100 in a length direction, and another electroacoustic device 40 is disposed at the other end of the electronic apparatus 100 in the length direction.

In some embodiments, the two electroacoustic devices 40 may be divided into a first electroacoustic device 410 and a second electroacoustic device 420. In the present embodiment, the expansion member 45 of the first electroacoustic device 410 and the body 41 of the second electroacoustic device 420 are disposed on the first housing 12 or the positions thereof are relatively fixed with respect to the first housing 12; and the body 41 of the first electroacoustic device 410 and the expansion member 45 of the second electroacoustic device 420 are disposed on the second housing 14 or the positions thereof are relatively fixed with respect to the second housing 14. That is, the first electroacoustic device 410 and the second electroacoustic device 420 may form a rotationally symmetric pattern. For example, in the present embodiment, at the first position, the first electroacoustic device 410 and the second electroacoustic device 420 may be centrally symmetrical with respect to the middle portion of the guide member 30.

Further, the casing 411 of the first electroacoustic device 410 has the sound hole 41b disposed at an end of the casing 411 facing away from the second electroacoustic device 420, and the casing 411 of the second electroacoustic device 420 has the sound hole 41b disposed at an end of the casing 411 facing away from the first electroacoustic device 410. When the first housing 12 moves to the first position relative to the second housing 14, the electroacoustic device 40 may thus obtain a better stereo effect to improve the user experience. That is, the casing 411 of the first electroacoustic device 410 may sound from the end facing away from the second electroacoustic device 420, and the casing 411 of the second electroacoustic device 420 may sound from the end facing away from the first electroacoustic device 410. In combination with FIG. 16, when the first housing 12 moves to the second position relative to the second housing 14, the above-mentioned configuration and structure also allow the electroacoustic device 40 to have a relatively good stereo effect.

Further, in some embodiments, the electronic apparatus 100 may include an angle sensor (not shown). The angle sensor is connected to the second housing 14 and the guide member 30. The angle sensor is configured to detect a rotation angle of the guide member 30. The angle sensor and the electroacoustic device 40 are both in a communication connection with a processor of the electronic apparatus 100. The processor is configured to control a loudspeaker parameter of the electroacoustic device 40 based on the rotation angle. In some embodiments, as an example, when the first housing 12 moves from the second position to the first position relative to the second housing 14, the angle sensor may use a Hall sensor or a photoelectric encoder, which is configured to measure the rotation angle of the guide member 30. A length of the flexible screen module 20 spread on the second housing 14 may be calculated based on the rotation angle of the guide member 30, and thus a stretching length of the retractable member 43 may be calculated, such that the volume of the channel 41a1 of the retractable member 43 and the volume of the sound cavity 41a can be calculated. Based on the volume of the sound cavity 41a in combination with the volume of the receiving cavity 45a, a frequency characteristic of the sound of the electroacoustic device 40 may be further calculated, or a relation between the stretching length of the retractable member 43 and the audio characteristic of the electroacoustic device 40 may be directly obtained through experiments. Further, a sound generation characteristic of the electroacoustic module 413 (such as sound frequency and loudness) may be appropriately adjusted to achieve the matching between the resonance space and the electroacoustic module 413, thereby obtaining a better loudspeaker effect.

In an embodiment in which a plurality of intermediate positions is provided between the first position and the second position, different loudspeaker parameters may be set based on different positions to achieve different loudspeaker effects at different positions, thereby broadening the application scenarios of the electroacoustic device 40. Furthermore, the length of the housing assembly 10 protruding from the flexible screen module 20 may be divided by intervals, and the loudspeaker parameters of the electroacoustic device 40 are set based on the intervals in combination with the volume of the sound cavity 41a and the volume of the receiving cavity 45a. When the spread-out length of the flexible screen module 20 is in a certain interval, the processor may directly set the loudspeaker parameter of the electroacoustic device 40 as a loudspeaker parameter corresponding to this interval. In this way, when no intermediate position or a few of middle positions is provided between the first position and the second position, i.e., when the spreading area of the flexible screen module 20 has greater randomness, the loudspeaker parameter of the electroacoustic device 40 can still well match with the display area of the flexible screen module 20, thereby achieving a good matching between the sound and the picture and improving the user experience. Moreover, the control manner of dividing intervals can also prevent the processor from frequently adjusting the sound generation characteristic of the electroacoustic device 40, thereby guaranteeing the service life of the electroacoustic device 40. In other embodiments, other sensors such as a photoelectric sensor may also be used to directly or indirectly measure the spread-out length of the flexible screen module 20, to adaptively adjust the loudspeaker parameters of the electroacoustic device 40, which is not described in detail herein.

The respective technical features described in the above embodiments can be arbitrarily combined with each other. For brief description, all possible combinations of these technical features in the foregoing embodiments are not described individually. However, any combination of these technical features shall fall within the scope the present disclosure, unless they are contradictory.

The above embodiments described in details illustrate merely some implementations of the present disclosure, and shall be regarded as limitations of the scope of the present disclosure. It should be pointed that, those skilled in the art, without departing from the concept of the present disclosure, can make various changes and improvements, which shall fall within the protection scope of the present disclosure. Therefore, the protection scope of the present disclosure is defined by the appended claims.

## Claims

1. An electronic apparatus, comprising:
a housing assembly comprising a first housing, and a second housing movably disposed on the first housing;
a flexible screen module disposed on the housing assembly; and
an electroacoustic device disposed in the housing assembly and having a sound cavity defined therein,
wherein during a movement of the second housing relative to the first housing, at least part of the flexible screen module moves into or out of the housing assembly and a volume of the sound cavity is variable.

2. The electronic apparatus according to claim 1, wherein:
the electroacoustic device comprises a retractable member having at least part of the sound cavity; and
during the movement of the second housing relative to the first housing, the retractable member is stretched or retracted to enable the volume of the sound cavity to be variable.

3. The electronic apparatus according to claim 2, wherein:
the retractable member has a first end and a second end, a position of the first end and a position of the first housing being relatively fixed, and a position of the second end and a position of the second housing being relatively fixed;
in response to that the flexible screen module is spread out of the housing assembly, the retractable member is stretched to enlarge the volume of the sound cavity; and
in response to that the flexible screen module spread out of the housing assembly is retracted into the housing assembly, the retractable member is shortened to reduce the volume of the sound cavity.

4. The electronic apparatus according to claim 3, wherein the electroacoustic device further comprises an expansion member connected to the second end, the expansion member having a receiving cavity in communication with the sound cavity, and the expansion member being connected to the first housing.

5. The electronic apparatus according to claim 4, wherein the electroacoustic device comprises a body connected to the first end and the second housing, the sound cavity being defined by the body and the retractable member together.

6. The electronic apparatus according to claim 5, wherein the body comprises:
a casing connected to the first end and the second housing; and
an electroacoustic module disposed in the casing and defining the sound cavity together with the casing and the retractable member.

7. The electronic apparatus according to claim 6, wherein when the flexible screen module spread out of the housing assembly is retracted into the housing assembly, the retractable member is folded between the casing and the expansion member.

8. The electronic apparatus according to claim 2, wherein two electroacoustic devices are provided in a direction perpendicular to a direction of the movement of the first housing relative to the second housing and spaced apart from each other, one of the two electroacoustic devices being disposed at one end of the flexible screen module, and the other one of the two electroacoustic devices being disposed at the other opposite end of the flexible screen module.

9. The electronic apparatus according to claim 8, wherein:
each of the two electroacoustic devices comprises a body and an expansion member;
the retractable member is connected between the body and the expansion member of each of the two electroacoustic devices;
the sound cavity is defined by the body and the expansion member together;
the expansion member of one of the two electroacoustic devices is disposed on the first housing, and the body of the one electroacoustic device is disposed on the second housing; and
the body of the other one of the two electroacoustic devices is disposed on the first housing, and the expansion member of the other one electroacoustic device is disposed on the second housing.

10. The electronic apparatus according to claim 8, wherein any one of the two electroacoustic devices is configured to sound from an end facing away from the other one of the two electroacoustic devices.

11. The electronic apparatus according to any one of claims 1 to 10, further comprising a guide member rotatably connected to the second housing and disposed at an end of the second housing facing away from the first housing, wherein:
the flexible screen module comprises a fixed end and a free end that are opposite to each other;
the fixed end is connected to the first housing;
the free end bypasses the guide member and is capable of being accommodated in the housing assembly; and
during the movement of the first housing relative to the second housing, the free end, along the guide member, is spread to the second housing or retracted in the housing assembly.

12. The electronic apparatus according to claim 11, further comprising:
an angle sensor connected to the second housing and the guide member, the angle sensor being configured to detect a rotation angle of the guide member; and
a processor configured to control a loudspeaker parameter of the electroacoustic device based on the rotation angle,
wherein the angle sensor and the electroacoustic device are both in a communication connection with the processor.

13. An electronic apparatus, comprising:
a housing assembly comprising a first housing, and a second housing movably disposed on the first housing;
a flexible screen module disposed on the housing assembly; and
an electroacoustic device having a sound cavity defined therein, the electroacoustic device comprising a body and a retractable member connected to the body, wherein:
the body is configured to sound through electrifying and connected to the second housing;
the retractable member has at least part of the sound cavity; and
during a movement of the second housing relative to the first housing, at least part of the flexible screen module moves into or out of the housing assembly, and the retractable member is stretched or retracted to enable a volume of the sound cavity to be variable.

14. The electronic apparatus according to claim 13, wherein:
the retractable member has a first end and a second end, the first end being connected to the body, and a position of the second end and a position of the first housing being relatively fixed;
in response to that the flexible screen module is spread out of the housing assembly, the retractable member is stretched to enlarge the volume of the sound cavity; and
in response to that the flexible screen module spread out of the housing assembly is retracted into the housing assembly, the retractable member is shortened to reduce the volume of the sound cavity.

15. The electronic apparatus according to claim 13, wherein the electroacoustic device comprises an expansion member connected to an end of the retractable member facing away from the body, the expansion member having a receiving cavity in communication with the sound cavity, and the expansion member being connected to the first housing.

16. The electronic apparatus according to claim 15, wherein when the flexible screen module spread out of the housing assembly is retracted into the housing assembly, the retractable member is folded between the housing and the expansion member.

17. The electronic apparatus according to claim 13, wherein two electroacoustic devices are provided in a direction perpendicular to a direction of the movement of the first housing relative to the second housing and spaced apart from each other, one of the two electroacoustic devices being disposed at one end of the flexible screen module, and the other one of the two electroacoustic devices being disposed at the other opposite end of the flexible screen module.

18. The electronic apparatus according to claim 17, wherein:
each of the two electroacoustic devices further comprises the expansion member;
the retractable member is connected between the body and the expansion member of each of the two electroacoustic devices;
the sound cavity is defined by the body and the expansion member together;
the expansion member of one of the two electroacoustic devices is disposed on the first housing, and the body of the one electroacoustic device is disposed on the second housing; and
the body of the other one of the two electroacoustic devices is disposed on the first housing, and the expansion member of the other one electroacoustic device is disposed on the second housing.

19. The electronic apparatus according to claim 18, wherein any one of the two electroacoustic devices is configured to sound from an end facing away from the other one of the two electroacoustic devices.

20. The electronic apparatus according to any one of claims 13 to 19, comprising:
a sensor disposed at the housing assembly and configured to detect a spread-out length of the flexible screen module spread out of the housing assembly; and
a processor configured to control a loudspeaker parameter of the electroacoustic device based on the spread-out length,
wherein the angle sensor and the electroacoustic device are both in a communication connection with the processor.
